# EUROPEAN PATENT SPECIFICATION

(11) **EP 2 746 334 B1**
(45) Date of publication and mention of the grant of the patent: **13.05.2015**
(21) Application number: 12198267.2
(22) Date of filing: 19.12.2012
(51) Int. Cl.: C08L 23/06

(54) **Polyethylene blend with improved ESCR**
Polyethylengemisch mit verbessertem ESCR
Mélange de polyéthylène ayant une meilleure résistance à la fissuration sous contrainte environnementale (ESCR)

(43) Date of publication of application: 25.06.2014
(73) Proprietor: Borealis AG, 1220 Vienna (AT)
(72) Inventor: Kulshreshtha, Bhawna, 4020 Linz (AT); Braun, Juliane, 4040 Linz (AT); Liu, Yi, 4209 Engerwitzdorf (AT)
(74) Representative: Campbell, Neil Boyd

(56) References cited:
- EP-A1- 2 354 183
- EP-A1- 2 365 995
- WO-A1-2006/045550
- US-A1- 2005 261 435

## Description

### Field of the Invention

The present invention relates to a polyethylene blend having improved environmental stress cracking resistance (ESCR). In particular, the invention relates to a blend of a multimodal high-density polyethylene (HDPE) component with a second higher molecular weight multimodal HDPE component. The invention also relates to a process for the manufacture of such blends as well as uses thereof.

Blends according to the invention are particularly suitable for producing shaped articles, especially injection-, blow- and compression-moulded articles, in particular caps and closures. The invention thus also relates to articles comprising such blends and the use of blends according to the invention for the production of articles, preferably injection-, blow- and compression-moulded articles.

### Background

Polyethylene blends where different polymers are blended to combine the positive attributes of each component polymer are widely used in many application fields, such as the production of pipes or films as well as in blow-moulding and injection-moulding. As raw materials become more expensive and consumers and manufacturers more demanding, polymer retailers are looking to provide lower cost, high performance articles to their customers.

Blow moulding and injection moulding may be used to make a wide variety of articles including articles having relatively complex shapes and a range of sizes. Blow moulding is a moulding process commonly used to produce a number of household and industrial containers (HIC). In this process, the polymer is melted and extruded into a mould. Compressed air is then used to inflate and shape the polymer into the desired form.

Blow and injection moulding are, for instance, suited for the manufacture of caps and closures (e.g. for containers of bottled water, juices and carbonated soft drinks), and articles used in transportation packaging which often have a particular form suited to the objects which they carry. Examples of such articles include boxes, bins, pallets, pails, trays and crates. Furthermore, such moulding techniques are widely used to produce articles for houseware applications, such as sink bowls and drainers, mixing bowls, food containers and buckets, as well as to produce thin wall packaging articles such as open top plastic containers for frozen or fresh food or non-food applications like paint, adhesives, cosmetics and pharmaceuticals.

Important properties of the polymer to be moulded are its mechanical properties which, in turn, determine the properties of the final moulded article. The properties of key importance when considering the suitability of a polymer for use in blow moulding and injection moulding processes are commonly the environmental stress cracking resistance (ESCR), which, for example, is measured in terms of the Full Notch Creep Test, FNCT, as set out in ISO Standard 16770, impact strength and the stiffness of the article formed from the polymer (which, for example, is measured in terms of the E-modulus). In particular, the polymer must have a good balance between parameters such as ESCR and stiffness. The polymer composition at the same time must have good processability, such as good flowability.

To "downgauge" and produce lighter articles there is an increasing need for stiffer polymeric materials. Higher stiffness allows articles to be manufactured with thinner walls and hence allows less raw material to be used per article than for less stiff articles. Thinner walls mean lighter articles and hence lower transport costs. Lighter articles also mean a reduction in cycle time which is also of great importance. Lighter articles will cool more rapidly allowing the moulding process to be run more frequently and more articles can be produced in a given period of time.

High density polyethylene is commonly used in compositions for blow mouldings due to its attractive mechanical strength.

Polyethylenes which have high molecular weight generally have improved mechanical properties over their lower molecular weight counterparts. However, as the molecular weight of the polyethylene increases, the processability of the resin usually decreases In addition, other important properties, such as ESCR, decrease as stiffness of the polymer increases. These properties are contradictory at least in part because, for example, ESCR improves with decreasing density whereas stiffness improves with increasing density.

There is therefore a trade off between mechanical properties and processability. No polymer offers the ideal package of properties. Those materials which exhibit the best mechanical properties tend to possess poor processability. Those materials which are readily processed have poor mechanical properties.

Improved ESCR is of particular importance for polymers which, in everyday use, come into contact with liquids, especially fizzy liquids.

In general, ESCR can be improved by the skilled man in known ways, e.g. by increasing the molecular weight of the polymer or by using a metallocene catalyst to manufacture a polymer. Higher molecular weight polymers and those made using metallocene catalysts are known to possess improved mechanical properties over, for example, Ziegler Natta polymers or polymers of lower molecular weight. However, these techniques for improving mechanical properties are only valuable if processability is maintained. Polymers with poor flow are not readily extruded or moulded and are therefore of limited value. Increased molecular weight and metallocene catalysis tend to lead to poor processability.

Although much development work has been done in the field of high density polyethylene moulding compositions, there remains a need for a high density polyethylene composition suitable for use in injection, blow and compression moulding, in particular for caps and closures, transport packaging and houseware applications, which achieves a high ESCR.

Previous work has demonstrated that the use of multimodal polyethylene blends are capable of providing improvements in at least one mechanical parameter in comparison to unimodal materials (i.e. those containing only a single polymer component). In a bid to provide further improvements, the use of nucleating agents in combination with multimodal polymers has been explored. Such compositions are described in, for example, EP1146077 (using sodium benzoate), EP 1591475 (using talc), and EP 2402391 (using a nucleating agent and slip agent combination).

Other multimodal polyethylene blends without the need for nucleating agents have been explored in, for example, DE 102005030941, WO 01/23446, DE 19945980, WO 2009/077142, WO 2007/003530, EP 1228101, US 6822051 (HDPE and LLDPE) and EP 2354184. Further polymer blends are explored in, for example, EP 1772485, EP 2328968, EP 1772485, US 2003/0187083 and WO 2010/022941. However, in many cases these compositions require at least one low molecular weight and/or lower density polyethylene component to be present; in a number of cases at least three components of low, medium and high molecular weight, respectively, are necessary. Generally, these cases also require significant amounts of each blend component. None apparently achieves an ESCR as high as that of the present invention.

The present inventors have now developed a high-density polyethylene (HDPE) blend having an excellent ESCR as measured by FNCT. Surprisingly, it is possible to achieve such advantageous ESCR values using only two polyethylene components, both of which are high density. The blends of the invention represent a significant and unexpected improvement in the development of polymers having advantageous mechanical properties.

### Summary of the Invention

Thus, viewed from one aspect the invention provides a high-density polyethylene (HDPE) blend comprising:
(I) 90 to 99.5 wt% of a lower molecular weight multimodal HDPE component having a density of at least 940 kg/m³ having an MFR2 of 0.1 g/10min or more; and
(II) 0.5 to 10 wt% of a higher molecular weight multimodal HDPE component different from component (I) having a density of at least 940 kg/m³ and having an MFR₅ of less than 2 g/10min;
wherein the blend has a density of at least 940 kg/m³ and an environmental stress crack resistance (FNCT) of at least 30 hours measured according to the full notch creep test (FNCT) (ISO 16770) at 50°C and 6 MPa.

Viewed from another aspect the invention provides a process for the preparation of a high-density polyethylene (HDPE) blend as hereinbefore defined comprising blending components (I) and (II) as hereinbefore defined in order to form a blend has a density of at least 940 kg/m³ and an environmental stress crack resistance (FNCT) of at least 30 hours measured according to the full notch creep test (FNCT) (ISO 16770) at 50°C and 6 MPa.

Viewed from a still further aspect the invention provides an article comprising a blend as defined above, preferably an injection-, blow- or compression- moulded article.

Viewed from a yet further aspect the invention provides the use of an HDPE blend as defined above in the manufacture of a moulded article.

### Detailed description of invention

Wherever the term "molecular weight" or "Mw" is used herein, the weight average molecular weight is meant.

The term "modality" generally refers to the number of maxima in a plot of the molecular weight distribution curve of a blend. Generally, though not necessarily, the number of maxima will correspond to the number of different polymer fractions in the composition.

As used herein the term "bimodal" is intended to cover polymer blends having two different polymeric fractions and/or two maxima in the molecular weight distribution curve. The term "multi-modal" is intended to cover polymer blends having two or more polymeric fractions in the polymer in the molecular weight distribution curve as determined by gel permeation chromatography (GPC). In such a curve d(log(Mw)) is plotted as ordinate against log (Mw), where Mw is molecular weight. Ideally, a trimodal blend will show three centred maxima along the x-axis of the molecular weight distribution curve as determined by gel permeation chromatography. Alternatively, the blend will show one maximum with two distinct shoulders (which are considered maxima for the purposes of the term "maximum" as used herein) along the x-axis of the molecular weight distribution curve as determined by gel permeation chromatography.

The polymer components in a polymer blend may be produced under different polymerization conditions resulting in different (weight average) molecular weights and molecular weight distributions for the fractions.

### Multimodal Polymer Component (I)

Multimodal HDPE component (I) forms the most abundant polymer present within the blend of the invention, i.e. it has the largest weight percentage. At least 90 wt% of the blend is formed from a multimodal HDPE component (I).

The HDPE component (I) is multimodal. The term "multimodal" means multimodal with respect to molecular weight distribution and includes also therefore bimodal polymers.

Usually, a HDPE composition, comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, the term multimodal polymer includes so called "bimodal" polymers consisting of two fractions. The form of the molecular weight distribution curve, i.e. the appearance of the graph of the polymer weight fraction as a function of its molecular weight, of a multimodal polymer will show two or more maxima or at least be distinctly broadened in comparison with the curves for the individual fractions.

Ideally, the molecular weight distribution curve for multimodal polymers of the invention will show two distinction maxima.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal HDPE, there is by definition a lower molecular weight component (LMW) and a higher molecular weight component (HMW). The LMW component has a lower molecular weight than the higher molecular weight component. This difference is preferably at least 5000. Preferably, in a multimodal HDPE component (I) of use in this invention at least one of the LMW and HMW components is a copolymer of ethylene. Further preferably, at least the HMW component is an ethylene copolymer. Further preferably, the lower molecular weight (LMW) component is an ethylene homopolymer.

Alternatively the multimodal HDPE component (I) may comprise other polymer components, e.g. up to 10 % by weight of a well known polyethylene prepolymer (obtainable from a prepolymerisation step as well known in the art). In case of such prepolymer, the prepolymer component is comprised in one of LMW and HMW components, preferably LMW component, as defined above.

The multimodal HDPE component (I) can be a homopolymer or a copolymer. The term homopolymer as used herein is intended to encompass polymers which consist of repeated units deriving from ethylene only. Homopolymers may, for example, comprise at least 99.9 wt%, of repeat units deriving from ethylene (i.e. any comonomer present is simply there as impurity).

If the multimodal HDPE is a copolymer then it can comprise ethylene and at least one C₃₋₁₀ comonomer component. Preferred copolymers are binary, i.e. they comprise ethylene and a single comonomer component.

Suitable comonomers for use in the compositions of the present invention include C₃₋₁₀ alpha-olefins, preferably selected from but-1-ene, hex-1-ene, 4-methylpent-1-ene, hept-1-ene, oct-1-ene, and dec-1-ene, more preferably but-1-ene and hex-1-ene. The use of 1-butene is especially preferred. The amount of comonomer present in the multimodal HDPE, is preferably at most 1.5 mol%, more preferably at most 0.7 mol% and most preferably at most 0.3 mol % of such comonomer units.

It will be appreciated therefore that the multimodal HDPE component (I) itself comprises at least two fractions, (A) and (B).

Fraction (A) will be a lower molecular weight component and fraction (B) a higher molecular weight component. In a preferred embodiment, fraction (A) comprises an ethylene homopolymer. Fraction (B) comprises an ethylene homopolymer or copolymer, in particular a copolymer. This may comprise a comonomer as described above.

The multimodal component (I) is high density polymer having a density of at least 940 kg/m³, preferably at least 941 kg/m³, preferably in the range 945 to 965 kg/m³, 946 to 961 kg/m³, especially 948 to 958 kg/m³. It is preferred if the density of the multimodal component (I) is higher than that of the higher Mw HDPE component (II). For example, the difference may be at least 3, preferably at least 5 kg/m³.

In one embodiment, the density of the component (I) preferably is 945 kg/m³ or more, still more preferably is 950 kg/m³ or more, still more preferably is 952 kg/m³ or more, and most preferably is 954 kg/m³ or more.

The melt flow rate, MFR₂ of the multimodal HDPE component (I) is preferably in the range 0.1 to 20 g/10min, e.g. 0.5 to 10 g/10min, preferably 1.0 to 8.0 g/10min.

The melt flow rate, MFR₅ of the multimodal HDPE component (I) is preferably in the range 0.2 to 40 g/10min, e.g. 1 to 20 g/10min, especially 2 to 16 g/10min

The MFR₂₁ of the multimodal HDPE component (I) may be in the range 5 to 200, preferably 10 to 100 g/10min.

The MFR of the multimodal component (I) is therefore higher than that of component (II). This is an indication therefore that the Mw of component (I) is lower than that of component (II).

The Mw of the multimodal HDPE component (I), may be in the range 100,000 to 250,000, preferably 120,000 to 200,000. The Mw/Mn of the multimodal HDPE component (I) is preferably 10 or more, more preferably of 15 or more, still more preferably of 17 or more, still more preferably of 20 or more, and most preferably of 22 or more. Component (I) preferably has an Mw/Mn of 60 or below, more preferably of 40 or below and most preferably of 35 or below.

As stated above the multimodal HDPE component (I) comprises at least a LMW component and a HMW component.

The LMW component of HDPE component (I) preferably has a MFR₂ of at least 50, preferably 50 to 700 g/10 min, more preferably at least 100 g/10 min, such as 100 to 600 g/10min. The molecular weight of the low molecular weight component should preferably range from 20,000 to 50,000, e.g. 25,000 to 40,000.

The density of the lower molecular weight component may range from 950 to 980 kg/m³, e.g. 950 to 970 kg/m³.

The lower molecular weight component preferably forms from 30 to 70 wt%, e.g. 40 to 60% by weight of the multimodal HDPE component (I) with the higher molecular weight component forming 70 to 30 wt%, e.g. 40 to 60% by weight.

The higher molecular weight component has a lower MFR₂ and a lower density than the lower molecular weight component so as to provide the overall properties of component (I) highlighted herein.

The higher molecular weight fraction (B) preferably has an Mw of 60 kD or higher, more preferably of 100 kD or higher. Furthermore, fraction (B) preferably has an Mw of 500 kD or lower, more preferably of 400 kD or lower.

Preferably, fraction (B) is an ethylene homo- or copolymer with a density of less than 965 kg/m³.

Most preferably, fraction (B) is a copolymer. Preferably the copolymer contains at most 1.5 mol%, more preferably at most 0.7 mol% and most preferably at most 0.3 mol % of such comonomer units.

Where herein features of fractions (A) and/or (B) of the composition of the present invention are given, these values are generally valid for the cases in which they can be directly measured on the respective fraction, e.g. when the fraction is separately produced or produced in the first stage of a multistage process. However, the composition may also be and preferably is produced in a multistage process wherein e.g. fractions (A) and (B) are produced in subsequent stages. In such a case, the properties of the fractions produced in the second step (or further steps) of the multistage process can either be inferred from polymers, which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagstrom, Conference on Polymer Processing (The Polymer Processing Society), Extended Abstracts and Final Programme, Gothenburg, August 19 to 21, 1997, 4: 13.

Thus, although not directly measurable on the multistage process products, the properties of the fractions produced in higher stages of such a multistage process can be determined by applying either or both of the above methods. The skilled person will be able to select the appropriate method.

### Multimodal HDPE Component (II)

Component (II) is also a multimodal polymer as hereinbefore defined. It may have a density of 940 kg/m³ or more, such as 940 to 970 kg/m³, especially 945 to 960 kg/m³. As noted above, it is preferred if component (II) has a lower density than the first component (I). A preferred range is therefore 946 to 958 kg/m³.

Component (II) has a high molecular weight indicated herein via an MFR₅ of less than 2.0 g/10min. Ideally the MFR₅ of component (II) is in the range of 0.01 to 1.0 g/10min, such as 0.1 to 0.75 g/10 min.

The actual Mw of component (II) is preferably at least 275,000 such as at least 300,000.

The multimodal HDPE component (II) can be a homopolymer or copolymer. It is preferably a copolymer. It can comprise ethylene and at least one C₃₋₁₀ comonomer component. Preferred copolymers are binary, i.e. they comprise ethylene and a single comonomer component.

Suitable comonomers for use in the compositions of the present invention include C₃₋₁₀ alpha-olefins, preferably selected from but-1-ene, hex-1-ene, 4-methylpent-1-ene, hept-1-ene, oct-1-ene, and dec-1-ene, more preferably but-1-ene and hex-1-ene. The use of 1-hexene is especially preferred. The amount of comonomer present in the multimodal HDPE, is preferably at most 1.5 mol%, more preferably at most 0.7 mol% and most preferably at most 0.3 mol % of such comonomer units.

It will be appreciated that the multimodal HDPE component (II) itself comprises at least two fractions, (C) and (D).

Fraction (C) will be a lower molecular weight component and fraction (D) a higher molecular weight component. In a preferred embodiment, fraction (C) comprises an ethylene homopolymer. Fraction (D) comprises an ethylene homopolymer or copolymer, in particular a copolymer. Again, the comonomers useable in fraction (D) are illustrated above. It is preferred if fraction (D) is a copolymer.

The Mw/Mn of the multimodal HDPE component (II) is preferably 10 or more, more preferably of 15 or more, still more preferably of 17 or more, still more preferably of 20 or more, and most preferably of 22 or more. Component (II) preferably has an Mw/Mn of 60 or below, more preferably of 40 or below and most preferably of 35 or below.

As stated above the multimodal HDPE component (II) also comprises at least a LMW component and a HMW component.

The LMW component of HDPE component (II) preferably has a MFR₂ of at least 50, preferably 50 to 500 g/10 min, more preferably at least 100 g/10 min. The molecular weight of the low molecular weight component should preferably range from 20,000 to 50,000, e.g. 25,000 to 40,000.

The density of the lower molecular weight component may range from 950 to 980 kg/m³, e.g. 950 to 970 kg/m³.

The lower molecular weight component preferably forms from 30 to 70 wt%, e.g. 40 to 60% by weight of the multimodal HDPE component (I) with the higher molecular weight component forming 70 to 30 wt%, e.g. 40 to 60% by weight.

The higher molecular weight component has a lower MFR₂ and a lower density than the lower molecular weight component so as to provide the overall properties of component (I) highlighted herein.

The higher molecular weight fraction (D) preferably has an Mw of 60 kD or higher, more preferably of 100 kD or higher. Furthermore, fraction (D) preferably has an Mw of 500 kD or lower, more preferably of 400 kD or lower.

Preferably, fraction (D) is an ethylene homo- or copolymer with a density of less than 965 kg/m³.

Most preferably, fraction (D) is a copolymer, e.g. with a C3-8 alpha olefin comonomer, especially a C2/C6 copolymer. Preferably the copolymer contains at most 1.5 mol%, more preferably at most 0.7 mol% and most preferably at most 0.3 mol % of such comonomer units.

It should be noted that polymers meeting the requirements of components (I) and (II) are commercially available from suppliers such as Borealis.

### Preparation of polymers

The multimodal HDPEs which form components (I) and (II) can be any conventional, e.g. commercially available, polymer composition that satisfy the requirements of each component. Alternatively, suitable polymer compositions can be produced in a known manner according to or analogously to conventional polymerisation processes described in the literature of polymer chemistry.

Unimodal HDPE, is preferably prepared using a single stage polymerisation, e.g. slurry or gas phase polymerisation, preferably a slurry polymerisation in slurry tank or, more preferably, in loop reactor in a manner well known in the art. As an example, a unimodal HDPE can be produced e.g. in a single stage loop polymerisation process according to the principles given below for the polymerisation of low molecular weight fraction in a loop reactor of a multistage process, naturally with the exception that the process conditions (e.g. hydrogen and comonomer feed) are adjusted to provide the properties of the final unimodal polymer.

Multimodal (e.g. bimodal) polymers can be made by mechanical blending two or more, separately prepared polymer components or, preferably, by in-situ blending in a multistage polymerisation process during the preparation process of the polymer components. Both mechanical and in-situ blending are well known in the field.

Accordingly, preferred multimodal HDPEs, are prepared by in-situ blending in a multistage, i.e. two or more stage, polymerization or by the use of two or more different polymerization catalysts, including multi- or dual site catalysts, in a one stage polymerization.

Preferably the multimodal HDPE, is produced in at least two-stage polymerization using the same catalyst, e.g. a single site or Ziegler-Natta catalyst. Thus, for example two slurry reactors or two gas phase reactors, or any combinations thereof, in any order can be employed. Preferably however, the multimodal polymer, is made using a slurry polymerization in a loop reactor followed by a gas phase polymerization in a gas phase reactor.

A loop reactor - gas phase reactor system is marketed by Borealis as a BORSTAR reactor system. Any multimodal polymer present is thus preferably formed in a two stage process comprising a first slurry loop polymerisation followed by gas phase polymerisation.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

Preferably, the lower molecular weight polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane.

The higher molecular weight component can then be formed in a gas phase reactor using the same catalyst.

Where the higher molecular weight component is made second in a multistage polymerisation it is not possible to measure its properties directly. However, the skilled man is able to determine the density, MFR₂ of the higher molecular weight component using Kim McAuley's equations. Thus, both density and MFR₂ can be found using K. K. McAuley and J. F. McGregor: On-line Inference of Polymer Properties in an Industrial Polyethylene Reactor, AIChE Journal, June 1991, Vol. 37, No, 6, pages 825-835.

The density is calculated from McAuley's equation 37, where final density and density after the first reactor is known.

MFR₂ is calculated from McAuley's equation 25, where final MFR₂ and MFR₂ after the first reactor is calculated. The use of these equations to calculate polymer properties in multimodal polymers is common place.

The multimodal HDPEs may be made using any conventional catalyst, such as a chromium, single site catalyst, including metallocenes and non-metallocenes as well known in the field, or Ziegler-Natta catalysts as is also known in the art. The preferred choice is any conventional Ziegler Natta catalyst. Such an HDPE is called a znHDPE herein.

In case of znHDPE the polyethylene polymer composition is manufactured using Ziegler-Natta catalysis. Preferred Ziegler-Natta catalysts comprise a transition metal component and an activator. The transition metal component comprises a metal of Group 4 or 5 of the Periodic System (IUPAC) as an active metal. In addition, it may contain other metals or elements, like elements of Groups 2, 13 and 17. Preferably, the transition metal component is a solid. More preferably, it has been supported on a support material, such as inorganic oxide carrier or magnesium halide. Examples of such catalysts are given, among others in WO 95/35323, WO 01/55230, WO 2004/000933, EP 810235 and WO 99/51646.

In a very preferable embodiment of the invention the polyethylene composition is produced using a Ziegler Natta catalyst disclosed in WO 2004/000933 or EP-A-0688794.

Conventional cocatalysts, supports/carriers, electron donors can be used.

### Amounts

Preferably, the multimodal HDPE blends of the invention comprise 90 to 99 wt% of the multimodal polymer component (I) and 10 to 1 wt% of the high molecular weight HDPE component (II).

Preferably there is 92 to 98 wt% of the multimodal HDPE component (I) and 8 to 2 wt% of the high Mw HDPE component (II).

Component (I) may constitute 93 to 95 wt% and component (II) may constitute 7 to 5 wt% of the blend.

Preferably, component (II) constitutes 2 to 6 wt% of the overall composition (and component (I) 98 to 94 wt%). In an embodiment of the invention, component (II) constitutes 3 wt% of the composition. In a further embodiment of the invention, fraction (II) constitutes 5 wt% of the blend.

### Blend Properties

The MFR₂ according to ISO 1133 of the blend is preferably at least 0.1 g/10min, more preferably at least 0.5 g/10 min. The upper limit for the MFR₂ of the blend is preferably 5.0 g/10min, more preferably 3.0 g/10 min.

The density of the blend is preferably in the range of 945 to 965 kg/m³, more preferably 950 to 960 kg/m³, still more preferably 952 to 956 kg/m³.

It will be appreciated that as there are two multimodal components present that the blend is also a multimodal material. The blend however can be regarded as essentially trimodal as the two lower molecular weight components (A) and (C) of the two components are similar in form and may overlie each other on GPC.

Viewed from another aspect the invention provides a trimodal high density polyethylene polymer comprising:
(I) 44 to 49.5 wt% of a LMW fraction which is a high density homopolymer having an MFR of at least 50 g/10min and a density of at least 950 kg/m3;
(II) 42 to 49.25 of a first HMW high density ethylene copolymer fraction having a density of at least 940 kg/m³ and having an MFR₂ of 0.05 to 10 g/10min; and
(III) 0.25 to 6 wt% of a second HMW high density ethylene copolymer fraction having a density of at least 940 kg/m³ wherein the MFR₂ value of component (II) is higher than the MFR₅ value of component (III).

Thus, if component (II) has an MFR₂ of 1 g/10 min then the MFR₅ of component (III) is less than 1 g/10min. The difference is preferably at least 0.5 g/10min.

Components (I) and (II) preferably form the entirety of the polymeric components in the blend according to the invention. In other words, the blends of the invention contain no polymeric components other than components (I) and (II).

The combination of components (I) and (II) alone (without any other additional components such as additives) will be called the base composition from hereon.

Any figures (e.g. % figures) quoted above or below in relation to the properties of the blend may also be applied to the base composition. Where additives are present, the properties of the blend are quoted with additives present.

The polyethylene blend of the invention may consist of said base composition or consist essentially of said base composition (i.e. the only components present are the base composition and optional additives, adjuvants and/or fillers and so on).

The blend of the invention may contain conventional additives for utilization with polyolefins, such as pigments (for example carbon black), stabilizers (antioxidant agents), antacids and/or anti-UV agents, antistatic agents and utilization agents (such as processing aid agents). Thus the blend of the invention contains the at least two components and optionally one or more additives. This is what is meant herein by the phrase "consisting essentially of". Preferably, the amount of any additives is 7 wt% or below, particularly preferably 6 wt% or below, of the blend.

The polymer blend of the invention has been found to allow the formation of articles having an ideal balance of properties. They have excellent mechanical properties and are readily processed. In particular, articles formed from the blend of the invention exhibit an exceptionally high ESCR whilst retaining excellent stiffness/ESCR balance.

The composition blend of the invention has an environmental stress crack resistance measured as FNCT full notch creep test according to ISO/DIS 16770.3 at 50°C and 6 MPa of at least 30 h , preferably at least 40 h ideally at least 50 h.

The manner in which the blend of the invention is produced is not critical to the present invention. The blend can be produced by mechanical blending of the individual fractions e.g. using a conventional compounding or blending apparatus, like a Banbury mixer, a Henschel mixer, a 2-roll rubber mill, Buss-co-kneader or a twin screw extruder. In the case of mechanical blending it has to be ensured that proper homogenization is achieved.

Any blending may be conveniently effected in an extruder. Blends can be compounded and extruded to pellets by any extruder known in the art. It is preferred, however, to use a twin screw extruder. It may be of a co-rotating type, such as those produced by Werner & Pfleiderer having a designation ZSK. Alternatively, it may be of a counter-rotating type, such as those produced by Japan Steel Works, having a designation JSW CIM-P, e.g. CIM90P or LCM continuous mixer by Kobe Steel, such as LCM500H, or Farrel continuous mixer (FCM) by Farrel. It is especially preferred to use a counter-rotating twin screw extruder.

Before the extrusion the blend may be mixed with the desired additives, fillers and adjuvants as known in the art.

Following melt blending of the components, the composition can be injection moulded, blow moulded, rolled, milled, extruded, film extruded, pipe extruded, or formed or fabricated in any manner whatsoever to form the desired product by known methods.

The present invention further concerns a blow-, injection- or compression-moulded article comprising the polyethylene blend as described hereinbefore, a process for preparing the blow-, injection- or compression- moulded article which comprises blow-, injection- or compression-moulding of the blend into an article, and to the use of the polyethylene blend for blow-, injection- or compression- moulding.

The polymer blend of the invention is preferably used in the manufacture of moulded articles, such as injection moulded, rotomoulded or blow moulded articles, especially blow moulded articles.

The polymer blend described herein is preferably a significant component of the articles of the invention, such as at least 50 wt% thereof, e.g. at least 80 wt% thereof. Ideally, the blend and any additives form the whole of the article in question.

Articles of particular interest include caps and closures, e.g. for use with containers, e.g. drinks containers such as bottles.

It is known that the temperature of the polymer melt may vary in the extruder, the highest (max) melt temperature of the composition in the extruder during the extrusion step is typically more than 150°C, suitably between 200 to 280°C.

Injection moulding of the composition hereinbefore described may be carried out using any conventional injection moulding equipment. A typical injection moulding process may be carried out a temperature of 190 to 275°C.

The invention will now be described with reference to the following non limiting examples.

### Determination methods

**Density** of the materials is measured according to ISO 1183:1987 (E), method D, with isopropanol-water as gradient liquid. The cooling rate of the plaques when crystallising the samples was 15 °C/min. Conditioning time was 16 hours.

### Melt Flow Rate (MFR) or Melt Index (MI)

The melt flow rate (MFR) is determined according to ISO 1133 and is indicated in g/10 min. The MFR is an indication of the melt viscosity of the polymer. The MFR is determined at 190°C for PE and at 230 °C for PP. The load under which the melt flow rate is determined is usually indicated as a subscript, for instance MFR₂ is measured under 2.16 kg load, MFR₅ is measured under 5 kg load or MFR₂₁ is measured under 21.6 kg load.

### Molecular weights, molecular weight distribution, Mn, Mw, MWD

The weight average molecular weight Mw and the molecular weight distribution (MWD = Mw/Mn wherein Mn is the number average molecular weight and Mw is the weight average molecular weight) is measured by a method based on ISO 16014-4:2003. A Waters 150CV plus instrument, equipped with refractive index detector and online viscosimeter was used with 3 x HT6E styragel columns from Waters (styrenedivinylbenzene) and 1,2,4-trichlorobenzene (TCB, stabilized with 250 mg/L 2,6-Di tert butyl-4-methyl-phenol) as solvent at 140 °C and at a constant flow rate of 1 mL/min. 500 µL of sample solution were injected per analysis. The column set was calibrated using universal calibration (according to ISO 16014-2:2003) with 10 narrow MWD polystyrene (PS) standards in the range of 1.05 kg/mol to 11 600 kg/mol. Mark Houwink constants were used for polystyrene and polyethylene (K: 19 x10⁻³ dL/g and a: 0.655 for PS, and K: 39 x10⁻³ dL/g and a: 0.725 for PE). All samples were prepared by dissolving 0.5 - 3.5 mg of polymer in 4 mL (at 140 °C) of stabilized TCB (same as mobile phase) and keeping for 2 hours at 140 °C and for another 2 hours at 160 °C with occasional shaking prior sampling in into the GPC instrument.

**Comonomer Content (%wt and %mol)** was determined by using ¹³C-NMR. The ¹³C-NMR spectra were recorded on Bruker 400 MHz spectrometer at 130 °C from samples dissolved in 1,2,4-trichlorobenzene/benzene-d₆ (90/10 w/w). Conversion between %wt and %mol can be carried out by calculation.

### Environmental Stress Crack Resistance

Environmental Stress Crack Resistance (ESCR) may be measured according to the full notch creep test method (FNCT) accoding to ISO/DIS 16770 at 50°C and 6 MPa stress with a notch depth of 1 mm and specimen dimensions 6 mm x 6 mm x 90 mm. The solvent used was 2 wt% Arcopal N110 in deionized water. Compression moulded samples were employed (ISO 1872-2).

### DSC method:

**Melting temperature (Tₘ) and heat of fusion (H_{f}), crystallization temperature (T_{c}) and heat of crystallization (H_{c}):** measured with Mettler TA820 differential scanning calorimetry (DSC) on 5 to 10 mg samples. DSC is run according to ISO 3146 / part 3 /method C2 in a heat / cool / heat cycle with a scan rate of 10 °C/min in the temperature range of +23 to +210°C. Crystallization temperature and **heat of crystallization** (H_{c}) are determined from the cooling step, while melting temperature and **heat of fusion** (H_{f}) are determined from the second heating step.

### Examples 1 and 2

Two blends according to the invention were produced using BorPure MB6561 (a bimodal HDPE meeting the requirements of component (I) as the first polymer fraction and BorSafe HE3490 as the second polymer fraction.

BorPure MB6561 has a density of 955 kg/m³ and a MFR₂ of 1.5 g/10min. HE3490 has a density of 948 kg/m³ and a MFR₅ of 0.25 g/10min.

MB6561 and HE3490 were extruded together and hence melt-blended at a melt temperature of 220°C.

Two blends were prepared, the first (Example 1) containing 3 wt% HE3490 powder (and hence 97 wt% of the MB6561) and the second (Example 2) containing 5 wt% HE3490.

**Table 1 shows a comparison of various physical properties measured for the compositions of Examples 1 and 2. The same properties were also measured in unblended MB6561 for comparative purposes.**

| Parameter | Unit | Example 1: MB6561 with 3% HE3490 | Example 2: MB6561 With 5% HE3490 | MB6561 (for comparison) |
|---|---|---|---|---|
| MFR | g/10 min | 1.17 | 1.2 | 1.5 |
| FNCT (time to failure) | Hours, h | 57.5 | 58.3 | 26 |
| Type of failure | - | Brittle | Brittle | N/A |
| Melting temperature | °C | 130.3 | 131.2 | 130 |
| Heat of fusion | J/g | 220 | 210.8 | 204 |
| Crystallisation temperature | °C | 115.6 | 115.1 | 117 |
| Heat of crystallisation | J/g | 220.2 | 215.6 | 210 |

In both Examples 1 and 2 a slight reduction is observed in the crystallisation temperature relative to MB6561, while the overall heat of crystallisation is increased slightly. This indicates that the overall wt% level of crystallinity is higher in the blend compared to the reference resin.

The MFR is observed to be slightly lower in both Example 1 and Example 2 when compared to MB6561, indicating a higher viscosity and hence higher Mw.

Most notably, the time to failure in the FNCT test increases by a factor of more than two relative to MB6561 in both Example 1 and Example 2. The achievement of a doubling of ESCR under the addition of only a modest amount of an additional multimodal HDPE polymer component to the blend represents a significant and unexpected improvement in ESCR compared to known bi- or multimodal polymers.

The heat of fusion and heat of crystallisation values indicate that where a second component is present there is a higher crystallinity. This might lead to faster cycle times.

## Claims

1. A high-density polyethylene (HDPE) blend comprising:
(I) 90 to 99.5 wt% of a lower molecular weight multimodal HDPE component having a density of at least 940 kg/m³ when measured according to ISO 1183:1987 (E), method D; and having an MFR₂ of 0.1 g/10min or more when measured according to ISO 1133 at 190 °C under 2.16 kg load; and
(II) 0.5 to 10 wt% of a higher molecular weight multimodal HDPE component different from component (I) having a density of at least 940 kg/m³ and having an MFR₅ of less than 2 g/10min when measured according to ISO 1133 at 190 °C under 5 kg load;
wherein the blend has a density of at least 940 kg/m³ and an environmental stress crack resistance (FNCT) of at least 30 hours measured according to the full notch creep test (FNCT) (ISO 16770) at 50°C and 6 MPa.

2. A blend according to claim 1 wherein component (I) has an MFR₂ of at least 0.5 g/10 min.

3. A blend according to claim 2 wherein at least one of fractions (I) and (II) is a composition having a bimodal distribution, preferably both are bimodal.

4. A blend according to any preceding claim wherein component (I) comprises a copolymer of ethylene and butene.

5. A blend according to any preceding claim wherein component (II) comprises a copolymer of ethylene and hexene.

6. A blend according to any preceding claim wherein the multimodal HDPE's comprises homopolymer and copolymer fractions.

7. A blend according to any preceding claim which consists essentially of components (I) and (II).

8. A blend according to any preceding claim wherein component (II) is present in an amount of from 2 to 6 wt% of the total blend and component (I) present as 98 to 94 wt% of the blend.

9. A blend according to any preceding claim wherein the density difference between components is at least 3 kg/m³.

10. A blend according to any preceding claim wherein component (II) has an MFR₅ value less than the MFR₂ value of component (I).

11. An article comprising a blend as defined in any preceding claim, preferably a blow-, injection- or compression-moulded article.

12. Use of an HDPE blend as defined in any preceding claim in the manufacture of an article, preferably a moulded article (e.g. a blow-, injection- or compression-moulded article).

13. A process for the preparation of a high-density polyethylene (HDPE) blend as claimed in any one of claims 1 to 10 comprising blending components (I) and (II) as hereinbefore defined in order to form a blend has a density of at least 940 kg/m³ and an environmental stress crack resistance (FNCT) of at least 30 hours measured according to the full notch creep test (FNCT) (ISO 16770) at 50°C and 6 MPa.

## Patentansprüche

1. Hochdichte-Polyethylen (HDPE)-Mischung, umfassend:
(I) 90 bis 99,5 Gew.-% von einem multimodalen HDPE-Bestandteil mit geringerem Molekulargewicht, der eine Dichte von mindestens 940 kg/m³ hat, gemessen gemäß ISO 1183:1987 (E), Methode D; und der einen MFR₂ von 0,1 g/10 min oder mehr hat, gemessen gemäß ISO 1133 bei 190 °C unter einer Last von 2,16 kg; und
(II) 0,5 bis 10 Gew.-% von einem multimodalen HDPE-Bestandteil mit höherem Molekulargewicht, der von dem Bestandteil (I) verschieden ist, der eine Dichte von mindestens 940 kg/m³ hat und der einen MFR₅ von weniger als 2 g/10 min hat, gemessen gemäß ISO 1133 bei 190 °C unter einer Last von 5 kg;
wobei die Mischung eine Dichte von mindestens 940 kg/m³ und eine Beständigkeit gegenüber umgebungsbedingter Spannungsrissbildung (FNCT) von mindestens 30 Stunden hat, gemessen gemäß dem Full Notch Creep Test (FNCT) (ISO 16770) bei 50 °C und 6 MPa.

2. Mischung nach Anspruch 1, wobei der Bestandteil (I) einen MFR₂ von mindestens 0,5 g/10 min hat.

3. Mischung nach Anspruch 2, wobei mindestens eine von den Fraktionen (I) und (II) eine Zusammensetzung ist, die eine bimodale Verteilung hat, und vorzugsweise beide bimodal sind.

4. Mischung nach einem der vorhergehenden Ansprüche, wobei der Bestandteil (I) ein Copolymer aus Ethylen und Buten umfasst.

5. Mischung nach einem der vorhergehenden Ansprüche, wobei der Bestandteil (II) ein Copolymer aus Ethylen und Hexen umfasst.

6. Mischung nach einem der vorhergehenden Ansprüche, wobei die multimodalen HDPEs Homopolymer- und Copolymer-Fraktionen umfassen.

7. Mischung nach einem der vorhergehenden Ansprüche, welche im Wesentlichen aus den Bestandteilen (I) und (II) besteht.

8. Mischung nach einem der vorhergehenden Ansprüche, wobei der Bestandteil (II) in einer Menge von 2 bis 6 Gew.-% der Gesamtmischung vorliegt und der Bestandteil (I) in einer Menge von 98 bis 94 Gew.-% der Mischung vorliegt.

9. Mischung nach einem der vorhergehenden Ansprüche, wobei der Dichteunterschied zwischen den Bestandteilen mindestens 3 kg/m³ ist.

10. Mischung nach einem der vorhergehenden Ansprüche, wobei der Bestandteil (II) einen MFR₅-Wert hat, der geringer ist als der MFR₂-Wert des Bestandteils (I).

11. Artikel, umfassend eine Mischung nach einem der vorhergehenden Ansprüche, vorzugsweise ein blasgeformter, spritzgegossener oder formgepresster Artikel.

12. Verwendung einer HDPE-Mischung nach einem der vorhergehenden Ansprüche in der Herstellung eines Artikels, vorzugsweise eines geformten Artikels (z. B. ein blasgeformter, spritzgegossener oder formgepresster Artikel).

13. Verfahren zur Herstellung einer Hochdichte-Polyethylen (HDPE)-Mischung nach einem der Ansprüche 1 bis 10, umfassend das Mischen der Bestandteile (I) und (II), die wie oben definiert sind, um eine Mischung zu bilden, die eine Dichte von mindestens 940 kg/m³ und eine Beständigkeit gegenüber umgebungsbedingter Spannungsrissbildung (FNCT) von mindestens 30 Stunden hat, gemessen gemäß dem Full Notch Creep Test (FNCT) (ISO 16770) bei 50 °C und 6 MPa.

## Revendications

1. Mélange de polyéthylène de haute densité (HDPE) comprenant :
(I) 90 à 99,5 % en poids d'un composant de HDPE multimodal de poids moléculaire inférieur ayant une masse volumique d'au moins 940 kg/m³ lorsqu'il est mesuré selon la norme ISO 1183:1987(E), méthode D ; et ayant un MFR₂ de 0,1 g/10 min ou plus lorsqu'il est mesuré selon la norme ISO 1133 à 190 °C sous charge de 2,16 kg ; et
(II) 0,5 à 10 % en poids d'un composant de HDPE multimodal de poids moléculaire supérieur différent du composant (I) ayant une masse volumique d'au moins 940 kg/m³ et ayant un MFR₅ de moins de 2 g/10 min lorsqu'il est mesuré selon la norme ISO 1133 à 190 °C sous charge de 5 kg ;
dans lequel le mélange a une masse volumique d'au moins 940 kg/m³ et une résistance à la fissuration sous contrainte environnementale (FNCT) d'au moins 30 heures mesurée selon le test complet de fluage à entaille (FNCT) (ISO 16770) à 50 °C et 6 MPa.

2. Mélange selon la revendication 1, dans lequel le composant (I) a un MFR₂ d'au moins 0,5 g/10 min.

3. Mélange selon la revendication 2, dans lequel au moins l'une des fractions (I) et (II) est une composition ayant une distribution bimodale, toutes deux étant de préférence bimodales.

4. Mélange selon l'une quelconque des revendications précédentes, dans lequel le composant (I) comprend un copolymère d'éthylène et de butène.

5. Mélange selon l'une quelconque des revendications précédentes, dans lequel le composant (II) comprend un copolymère d'éthylène et d'hexène.

6. Mélange selon l'une quelconque des revendications précédentes, dans lequel les HDPE multimodaux comprennent des fractions d'homopolymère et de copolymère.

7. Mélange selon l'une quelconque des revendications précédentes, qui est constitué essentiellement de composants (I) et (II).

8. Mélange selon l'une quelconque des revendications précédentes, dans lequel le composant (II) est présent en quantité de 2 à 6 % en poids du mélange total et le composant (I) est présent à raison de 98 à 94 % en poids du mélange.

9. Mélange selon l'une quelconque des revendications précédentes, dans lequel la différence de masse volumique entre les composants est d'au moins 3 kg/m³.

10. Mélange selon l'une quelconque des revendications précédentes, dans lequel le composant (II) a une valeur MFR₅ inférieure à la valeur MFR₂ du composant (I).

11. Article comprenant un mélange selon l'une quelconque des revendications précédentes, de préférence un article moulé par soufflage, par injection ou par compression.

12. Utilisation d'un mélange de HDPE selon l'une quelconque des revendications précédentes dans la fabrication d'un article, de préférence un article moulé (par exemple un article moulé par soufflage, par injection ou par compression).

13. Procédé de préparation d'un mélange de polyéthylène de haute densité (HDPE) selon l'une quelconque des revendications 1 à 10, comprenant le mélange de composants (I) et (II) comme défini ci-dessus pour former un mélange présentant une masse volumique d'au moins 940 kg/m³ et une résistance à la fissuration sous contrainte environnementale (FNCT) d'au moins 30 heures mesurée selon le test complet de fluage à entaille (FNCT) (ISO 16770) à 50 °C et 6 MPa.
